# EUROPEAN PATENT APPLICATION

(11) **EP 4 763 697 A1**
(43) Date of publication of application: **24.06.2026**
(21) Application number: 24222002.8
(22) Date of filing: 20.12.2024
(51) Int. Cl.: B64C 9/02, B64C 9/22

(54) **WING FOR AN AIRCRAFT**

(71) Applicant: AIRBUS Operations GmbH, 21129 Hamburg (DE)
(72) Inventor: Schlipf, Bernhard, 21129 Hamburg (DE); Krey, Dennis, 21129 Hamburg (DE)
(74) Representative: Bird & Bird LLP - Hamburg

(57) **Abstract**

Herein illustrated and described is a wing (5) for an aircraft (1), comprising a main wing (9) and a leading edge high lift assembly (11) comprising a slat (13) and a connection assembly (15) movably connecting the slat (13) to the main wing (9), wherein the connection assembly (15) comprises an elongate slat track (27) that extends along a track longitudinal centre axis (29) between a first end (31) and a second end (33), wherein the first end (31) of the slat track (27) is mounted to the slat (13), wherein the slat track (27) is mounted to the main wing (9) by a roller bearing (37) such that the slat track (27) is movable along the track longitudinal centre axis (29), wherein the slat track (27) is mounted to the slat (13) via a link arrangement (39) comprising at least a first link element (41), wherein the first link element (41) is mounted to the slat (13) via a first slat bearing (51) and is mounted to the slat track (27) via a first track bearing (53), the slat track (27) comprises a recess (59) opening to the upper side and/or to the lower side of the slat track (27), and at least the first link element (41) of the link arrangement (39) extends through the recess (59). Further illustrated and described is a leading edge high lift assembly and an aircraft comprising such a wing or such a leading edge high lift assembly.

## Description

The present invention relates to a wing for an aircraft. Further aspects of the invention relate to a leading edge high lift assembly for such a wing, as well as to an aircraft comprising such a wing and/or comprising such a leading edge high lift assembly.

The described wing for an aircraft comprises a main wing and a leading edge high lift assembly, the leading edge high lift assembly comprising a slat and a connection assembly movably connecting the slat to the main wing, such that the slat is movable between a retracted position and at least one extended position.

The connection assembly comprises an elongate slat track that extends along a track longitudinal centre axis between a first end and a second end and that has an intermediate portion between the first and second ends. The slat track may have a curved or straight form along the track longitudinal centre axis. At least one, or both, of the first end and the intermediate portion of the slat track is/are mounted to the slat. The first end preferably corresponds to a front end of the slat track, e.g. the end positioned towards the intended direction of forward motion of the wing during flight of an aircraft. The first end and/or the intermediate portion of the slat track is mounted to the slat via a link arrangement comprising at least a first link element. The first link element is mounted, preferably by its one end, to the slat via a first slat bearing and is mounted, preferably by its opposite end, to the slat track via a first track bearing.

The slat track is mounted to the main wing by a roller bearing such that the slat track is movable along the track longitudinal centre axis, in particular along a predefined travel path, such as between a stowed position when the slat is in the retracted position and a deployed position when the slat is in the extended position.

The slat track may take the form of, for example, a C-shape, such that its surface lies opposite the circumferential surface of the roller bearing, wherein the distance between an upper surface and a lower surface of the slat track is larger than a diameter of a roller bearing, such that the roller bearing may engage only one of the upper surface or the lower surface of the slat track at any one time. I.e. the distance between the upper and lower surfaces of the slat track is selected such that a clearance is provided between the roller bearing and either the upper surface or the lower surface of the slat track, such that the roller bearing cannot engage with the upper and lower surfaces of the slat track at the same time, thereby becoming wedged therein.

Similar wings are known in the art. Due to space and design limitations of the wing and slat connection, known leading edge high lift assemblies typically comprise a slat interfaces, such as bearing points for the slat and/or the slat track, that are located entirely below the slat track or in the area of the track longitudinal centre axis. Such locations of the bearing points can lead to a limited length of the links that can be used in such slat connections leading to a limited spanwise tolerance of the slat vis-à-vis the slat track. Also, the bearing points in the area of the track longitudinal centre axis might be in the way for the roller path, thus leading to a greater required length of the slat track.

Therefore, the object of the present invention is to provide a wing having a compact leading edge high lift assembly, in particular a short slat track, that allows for increased spanwise tolerance of the slat.

The object is achieved in that the slat track, preferably in the area of the first end and/or the intermediate portion, comprises a recess opening to the upper side and/or to the lower side of the slat track. At least the first link element of the link arrangement extends through the recess, i.e. is located at least partially within the recess. Preferably, at least the first link element of the link arrangement extends through the recess with an essential part of its (the link element's) length, preferably at least 20%, more preferred at least 30%, more preferred at least 40%, more preferred at least 50% of its length. The recess preferably comprises a through-opening from the upper side to the lower side of the slat track. In this case, the first link element may extend through the entire through-opening from the upper side to the lower side of the slat track. Preferably, the first link element of the link arrangement extends through the recess with a portion of its length extension located between the first slat bearing and the first track bearing.

Preferably, the recess is adapted to receive the first link element such that the first link element is arranged at least partially within the recess. This allows for a compact arrangement of the high lift assembly and, in particular, a minimized track length, as the entire length of the slat track can be used as roller path. Also, at least the first link element can be formed with a greater length, thereby allowing a greater spanwise deflection of the slat relative to the slat track, which in turn reduces constraint forces. The recess can be created by cutting a groove or channel into the slat track, or by forming two slat track parts of the slat track to define a recess between them. Either method allows for the first link element of the link arrangement to be partially or fully received within the recess, resulting in a more compact leading edge high lift assembly.

According to a preferred embodiment, the link arrangement comprises a second link element that is mounted, preferably by its one end, to the slat via a second slat bearing and that is mounted, preferably by its opposite end, to the slat track via a second track bearing. The second link element may also extend through the recess. The first and second link elements might be positioned consecutively along the track longitudinal centre axis. The second link element provides additional support for attaching the slat to the slat track, so that rotation of the slat about a spanwise-extending axis is restricted.

According to a further preferred embodiment, the first slat bearing, the first track bearing, the second slat bearing, and/or the second track bearing is formed as or comprises a spherical bearing. Spherical bearings allow for a greater range of motion, enabling the slat to rotate in multiple directions. In this way, constraint forces due to elastic deformation of the wing during flight can be avoided..

It is further preferred that the second link element is formed as a link plate wherein the second slat bearing and/or the second track bearing comprises two spaced spherical bearings. The two spherical bearings help provide two load paths and to prevent rotation of the slat about a spanwise-extending axis. In this preferred embodiment, the link arrangement might comprise five spherical bearings in total, three of which are provided in the second link element and two are provided in the first link element. In this arrangement, when the recess is formed wide enough, the first and second link elements may pivot in the span direction, so that the slat can move in the span directionto some extent to provide tolerance and avoid constraint forces. This spanwise movable connection is referred to as "slave connection".

In a preferred alternative embodiment, in addition to the link arrangement, in particular to the first link element, the slat track is directly, preferably without a link in between, mounted to the slat via a spanwise fixed bearing. This can also be referred to as the master connection. A connection assembly for one slat usually comprises one master connection for fixing the slat in span direction, and at least one slave connection for provided spanwise tolerances to avoid constraint forces. The fixed bearing can for example comprise a fixed lug connection. This allows no spanwise relative motion between the slat track and the slat.

According to a preferred embodiment, one or both of the first track bearing and the second track bearing comprises an eccentric bush or an eccentric bolt for adjusting a mounting angle of the slat. The eccentric bush or eccentric bold is located between the first link element and/or the second link element, respectively, and the slat track and allows lateral movement of the respective first and/or second link element by rotation of the eccentric bus or bolt, to allows for adjustment of the mounting angle of the slat vis-à-vis the slat track. In a further preferred embodiment, each one of the first track bearing and the second track bearing comprises an eccentric bush or an eccentric bolt.

According to a preferred embodiment, the first slat bearing and/or the second slat bearing, preferably when viewed in a span direction, is located at the upper side or above the slat track, while the first track bearing and/or the second track bearing is located within the slat track contour, preferably overlapping with a spanwise cross section of the slat track, or at the lower side or below the slat track, or the first slat bearing and/or the second slat bearing, preferably when viewed in a span direction, is located at the lower side or below the slat track, while the first track bearing and/or the second track bearing is located within the slat track contour, preferably overlapping with a spanwise cross section of the slat track, or at the upper side or above the slat track, preferably so that the first link element crosses the track longitudinal centre axis. Preferably, one of the first slat bearing and the first track bearing may be located at the lower side or below the slat track and the other one of the first slat bearing and the first track bearing may be located at the upper side or above the slat track, preferably when viewing the slat track in a span direction and/or with respect to a normal position of the related aircraft on the ground. Further, the first link element may cross the track longitudinal centre axis. The first slat bearing and the first track bearing being located below and above the slat track allows the first link element to be formed with a greater length. This extends the range of possible spanwise motion and enhances the mobility of the slat to reduce constraint forces on the slat. Additionally, by placing the first slat bearing above the track longitudinal centre axis, the leading edge high lift assembly experiences more tension than compression loads, thereby enhancing its stability. This may also be achieved if one of the first slat bearing and the first track bearing is located at the lower side or below the slat track, in particular below the track longitudinal centre axis, and the other one of the first slat bearing and the first track bearing is located on the slat track, in particular on the track longitudinal centre axis. Placing one of the bearings on the slat track or on the track longitudinal centre axis can be sufficient to provide an enlarged first link. This especially applies when there are smaller lateral forces on the high lift edge assembly, e.g. as for smaller wings.

Further preferably, the recess is formed as a slot, preferably extending from the lower side to the upper side of the slat track, extending along the track longitudinal centre axis, preferably extending in a longitudinal symmetry plane of the slat track. The recess may be formed as a slot extending from the lower side to the upper side of the slat track and preferably extends in a longitudinal symmetry plane of the slat track. The longitudinal symmetry plane may be spanned by the track longitudinal centre axis and a thickness direction of the slat track. By forming the recess as a slot extending from the lower side to the upper side of the slat track, the first and second link elements of the link arrangement can operate over a wide range of motion. Moreover, by extending the recess in a longitudinal symmetry plane of the slat track, the slat track can be formed by two essentially symmetric track halves, and the weight of the assembly can be distributed more evenly, reducing the risk of imbalance or instability during operation.

It is further preferred that the slat track comprises separate first and second track parts, preferably track halves, assembled along the track longitudinal centre axis, preferably mounted together along the longitudinal symmetry plane, and wherein the slot is formed between the first and second track parts. Each track part may form an individual main load path. By mounting the track parts together along the longitudinal symmetry plane, the slat track may be made more stable and able to withstand heavy loads. Additionally, the slot formed between the first and second track parts may allow for easy insertion and removal of the leading edge high lift assembly. Preferably, each track part may form an individual main load path, which helps to provide redundant load paths and to distribute the load evenly. This means that in the event of any damage or failure of one track part, the other track part still transfers all loads applied.

Further preferably, the recess has such a form, e.g. a V-shape, or dimension, in particular spanwise width, that it allows movement, of at least the first link element in the span direction. The movement may allow spanwise movement of the slat relative to the slat track. It is preferred that the recess has a V-shape or similar form that allows for movement, particularly pivot movement, of at least the first link element in the span direction. The recess may also have a beveled shape or V-shape, which provides additional room for pivot movement of the first and/or second link element and thus for spanwise movement of the slat relative to the slat track.

According to a preferred embodiment, the recess is formed such that movement of the first link element and/or the second link element is limited in a span direction and/or or in the direction of the track longitudinal centre axis. The movement may be limited by the material of the slat track defining and/or surrounding the recess. The material of the slat track may thus function as a stopper. The stopper is preferably formed by multiple stopper surfaces that are spaced apart along the track longitudinal centre axis. Preferably, a first stopper surface is arranged at the first end of the slat track facing into the direction of the second link element and arranged to limit the movement of the second link element along the track longitudinal centre axis in a direction towards the first end. Further preferably, the stopper comprises a second and third stopper surface that are arranged between the first and second link element and that face to opposite sides along the track longitudinal centre axis. Further preferably, the stopper comprises a fourth stopper surface that is arranged closer to the second end than the first to third stopper surfaces are and that faces a surface of the first link element to be able to limit the movement of the first link element into the direction of the second end. The stopper may prevent the first link element and/or second link element from moving beyond a certain point in the span direction and/or in the direction of the track longitudinal centre axis. This is particularly advantageous in case of failure of the first link element and/or the second link element. In particular, if one of the first and second link elements or their bearings fails, the other link element tends to rotate freely, which is restricted by the respective stopper surfaces. By limiting the movement of the link elements, the stopper also helps to maintain the correct alignment and spacing of the slats, which is advantageous for proper and efficient operation of the leading edge high lift assembly.

According to a preferred embodiment, the roller bearing comprises at least two roller units mounted to the main wing and configured to engage a corresponding engagement surface at the slat track, or wherein the roller bearing comprises a first roller unit mounted to the second end of the slat track and configured to engage a guide rail mounted to the main wing, and a second roller unit mounted to the main wing and configured to engage a corresponding engagement surface at the slat track. Each roller unit might comprise one or two rollers. When the roller unit comprises two rollers, each roller might be associated with, i.e. mounted to or engaged by, one of the track parts to have two individual main load paths. The roller bearing may comprise at least two roller units, preferably three roller units, mounted to the main wing and configured to engage a corresponding engagement surface at the slat track. The engagement surface might be on upper and/or lower surface of slat track, so that the engagement surfaces face away from one another, or might be provided in a recess formed in one or both lateral sides of the slat track, so that the engagement surfaces face towards one another. In such a way, a very simple, compact, reliable and efficient roller bearing is provided.

Alternatively, the roller bearing comprises a first roller unit mounted to the second end of the slat track, i.e. to its rear end, and configured to engage a guide rail mounted to the main wing, preferably fixedly mounted to the main wing. The roller bearing further comprises a second roller unit mounted to the main wing, preferably fixedly mounted to the main wing, and configured to engage a corresponding engagement surface at the slat track. The engagement surface might be e.g. on an upper and/or lower surface of slat track, so that the engagement surfaces face away from one another, or might be provided in a recess formed in one or both lateral sides of the slat track, so that the engagement surfaces face towards one another. In such a way, an alternative simple, compact, reliable and efficient roller bearing is provided.

According to a further preferred embodiment, the wing further comprises a drive unit mounted to the main wing and coupled to the slat track or slat for moving the slat track and hence the slat between the retracted position and the at least one extended position. The drive unit preferably comprises a drive pinion mounted to the main wing and engaging a rack provided at the slat track. Alternatively, the drive unit comprises a drive linkage including at least one drive link coupled to the slat track or to the slat and driven by a rotating actuator or a linear actuator mounted at the main wing. Further alternatively, the drive unit comprises a rotating drive arm mounted to the main wing and engaging a corresponding counter-bearing, such as a pin, mounted to the slat track or slat. In such a way, simple, reliable and efficient drive units are provided.

A further aspect of the invention relates to a leading edge high lift assembly for the wing according to any of the aforementioned embodiments. The leading edge high lift assembly comprises a slat and a connection assembly configured for movably connecting the slat to the main wing, such that the slat is movable between a retracted position and at least one extended position. The connection assembly comprises a slat track that extends along a track longitudinal centre axis between a first end and a second end and has an intermediate portion between the first and second ends. The first end and/or the intermediate portion of the slat track is configurable to be mounted to the slat. The slat track is configurable to be mounted to the main wing by a roller bearing such that the slat track is movable along the track longitudinal centre axis. The slat track is mounted to the slat via a link arrangement comprising at least a first link element. The first link element is mounted to the slat via a first slat bearing and is mounted to the slat track via a first track bearing. The slat track comprises a recess opening to the upper side and/or to the lower side of the slat track, and at least the first link element of the link arrangement extends through the recess. The features and effects described above in connection with the wing apply vis-à-vis also to the leading edge high lift assembly.A further aspect of the invention relates to an aircraft comprising a wing according to any of the afore-described embodiments, and/or comprising a leading edge high lift assembly according the afore-described embodiments. The features and effects described above in connection with the wing and in connection with the leading edge high lift assembly apply vis-à-vis also to the aircraft.

Hereinafter, preferred embodiments of the present invention are explained in more detail by means of a drawing. The drawing shows in
- Fig. 1: a perspective view of an aircraft according to the invention,
- Fig. 2: a perspective view of a leading edge high lift assembly of a wing according to an embodiment of the invention (slave connection),
- Fig. 3: a cross-sectional view along the track longitudinal centre axis of the leading edge high lift assembly shown in Fig. 2,
- Fig. 4: a top view of a leading edge high lift assembly shown in Fig. 2,
- Fig. 5: a cross sectional view across the track longitudinal centre axis of a slat track of a wing according to an embodiment of the invention,
- Fig. 6: a cross sectional view across the track longitudinal centre axis of a slat track of a wing according to an alternative embodiment of the invention, and
- Fig. 7: a perspective view of a leading edge high lift assembly according to another embodiment of the invention (master connection).

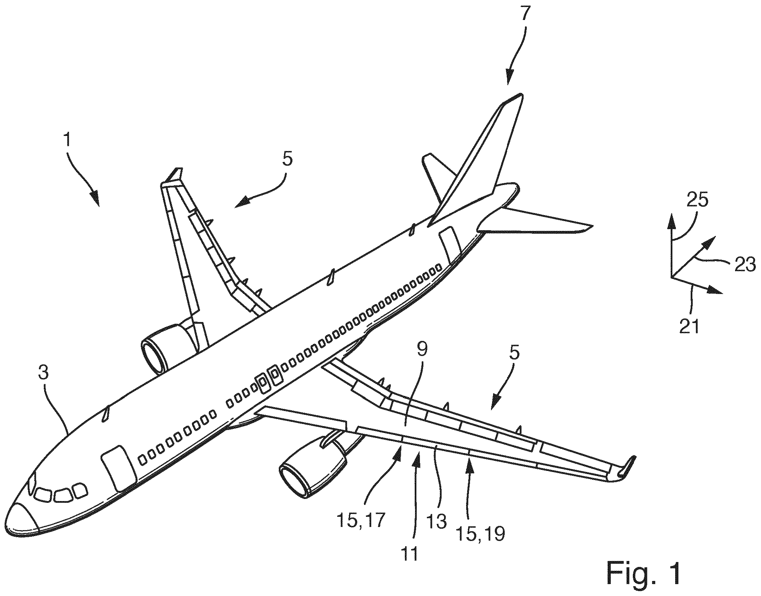

In Fig. 1 an aircraft 1 according to an embodiment of the present invention is illustrated. The aircraft 1 comprises a fuselage 3, wings 5, and a tail unit 7. Each wing 3 comprises a main wing 9 and a leading edge high lift assembly 11 including a slat 13 and a connection assembly 15 connecting the slat 13 to the main wing 9 such that the slat 13 is movable relative to the main wing 9.

As shown in Fig. 1, the connection assembly 15 relates to a first connection assembly 17, and the wing 5 comprises a second connection assembly 19 connecting the slat 13 to the main wing 9 in a position spaced apart from the first connection assembly 17 in a span direction 21, and wherein the second connection assembly 19 is formed as the first connection assembly 17.

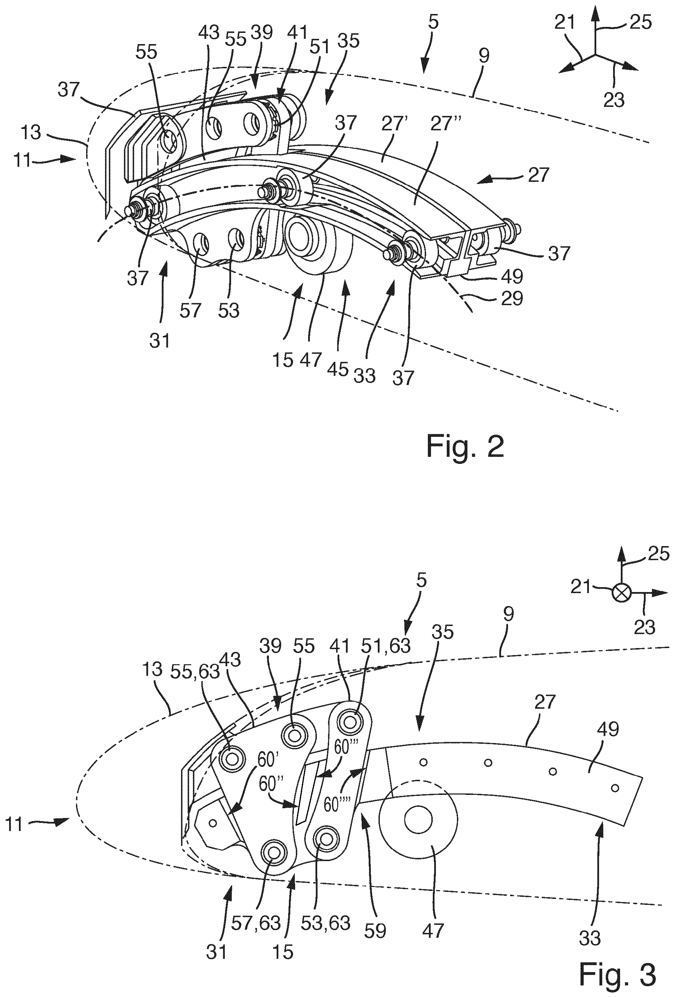

The wings 5 including the connection assembly 17 extend in the span direction 21, a chord direction 23 and a thickness direction 25, wherein the directions are perpendicular to each other. The connection assembly 17 will be described in more detail with regard to Fig. 2.

Fig. 2 illustrates a perspective view of a leading edge high lift assembly 11 of a wing 5 according to an embodiment of the invention, as it might be employed, for example, in the aircraft 1 shown in Fig. 1. The connection assembly 15 comprises an elongate slat track 27 that extends along a track longitudinal centre axis 29 between a first end 31 and a second end 33 and has an intermediate portion 35 between the first and second ends 31, 33. The first end 31 of the slat track 27 is mounted to the slat 13. The slat track 27 is mounted to the main wing 9 by a roller bearing 37 such that the slat track 27 is movable along the track longitudinal centre axis 29. The roller bearing 37 comprises three roller units mounted to the main wing 9 and configured to engage a corresponding engagement surface at the slat track 27. The slat track 27 is mounted to the slat 13 via a link arrangement 39 comprising a first link element 41 and a second link element 43.

The wing 5 further comprises a drive unit 45 mounted to the main wing 9 and coupled to the slat track 27 for moving the slat track 27 and hence the slat 13 between the retracted position and the at least one extended position. The drive unit 45 comprises a drive pinion 47 mounted to the main wing 9 and engaging a rack 49 provided at the slat track 27. The link arrangement 39 will be described in more detail with regards to Fig. 3.

Fig. 3 illustrates a cross-sectional side view of a leading edge high lift assembly 11 of a wing 5 according to an embodiment of the invention, as it might be employed, for example, in the aircraft 1 shown in Fig. 1. The first link element 41 is mounted to the slat 13 via a first slat bearing 51 formed as a spherical bearing 63 and is mounted to the slat track 27 via a first track bearing 53 formed as a spherical bearing 63. The second link element 43 is formed as a link plate and mounted by its one end to the slat 13 via a second slat bearing 55 comprising two spherical bearings 63 and is mounted by its opposite end to the slat track 27 via a second track bearing 57 formed as a spherical bearing 63. The slat track 27 comprises in the area of the first end 31 a recess 59 opening to the upper side and to the lower side of the slat track 27. The first link element 41 and the second link element 43 are located at least partially within the recess 59. As can be seen from Fig. 3, the first link element 41 and the second link element 43 of the link arrangement 39 extend entirely through the recess 59 between the first slat bearing 51 and the first track bearing 53 and between the second slat bearing 55 and the second track bearing 57 respectively. Such a leading edge high lift assembly 11 is referred to as "slave connection" due to the spanwise movability of the slat 13 relative to the slat track 27.

The recess 59 is formed such that movement of the first link element 41 and the second link element 43 is limited in the span direction 21 and in the chord direction 23 along the track longitudinal centre axis 29. The movement in the chord direction 23 is limited by a stopper 60 that is formed by a material of the slat track 27 defining or surrounding the recess 59. The material of the slat track 27 may thus function as the stopper 60. The stopper 60 comprises multiple stopper surfaces 60', 60", 60‴, 60ʺʺ that are spaced apart along the track longitudinal centre axis 29. The stopper surfaces 60', 60", 60‴, 60ʺʺ are facing the first and second link elements 41, 43 from both sides, in particular surfaces of the first and second link element 41, 43 to limit the movement of the first and second link element 41, 43 along the track longitudinal centre axis 29, in particular in case of failure of the first link element 41 and/or the second link element 43.

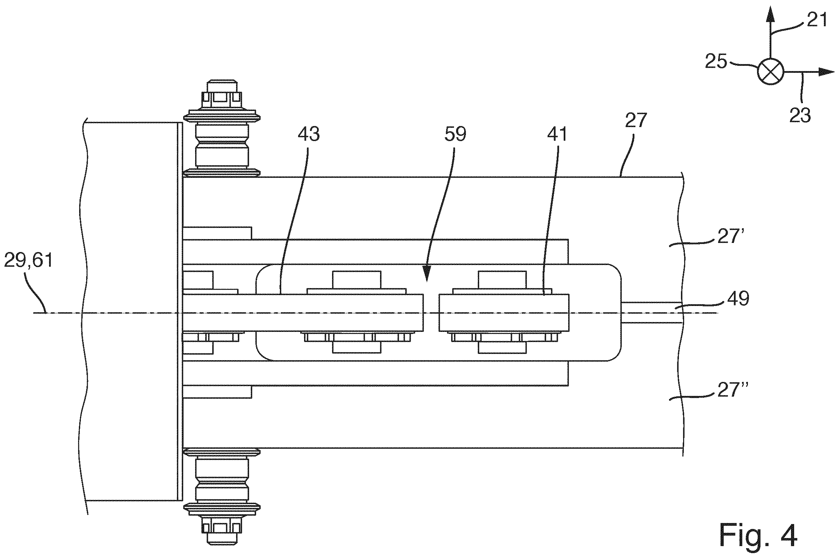

As can be seen from Fig. 3, the first slat bearing 51 and the second slat bearing 55, when viewed in the span direction 21, are located at the upper side or above the slat track, while the first track bearing 53 and the second track bearing 57 are located at the lower side or below the slat track. The recess 59 will be further described with regard to Fig. 4.

Fig. 4 illustrates a top view of a leading edge high lift assembly 6 of a wing 3 according to an embodiment of the invention, as it might be employed, for example, in the aircraft 1 shown in Fig. 1. The recess 59 is formed as a slot, extending from the lower side to the upper side of the slat track 27, extending along the track longitudinal centre axis 29, extending in a longitudinal symmetry plane of the slat track 27.

The slat track 27 comprises separate first and second track parts 27', 27", that can be described as track halves, assembled along the track longitudinal centre axis 29. In more detail, the first and second track parts 27', 27" are mounted together along the longitudinal symmetry plane of the slat track 27, and wherein the recess 59 is formed between the first and second track parts 27', 27". Each track part forms an individual main load path.

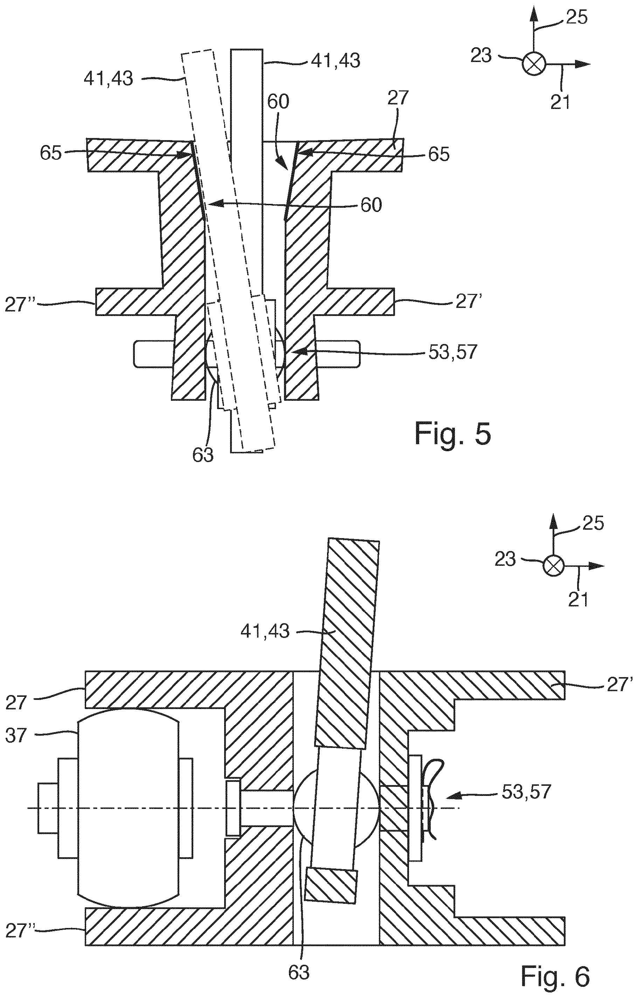

Figs. 5 and 6 illustrate cross sectional back views of a leading edge high lift assembly 11 of a wing 5 according to an embodiment of the invention, as it might be employed, for example, in the aircraft 1 shown in Fig. 1. As can be seen from Fig. 5, the first track bearing 53 and the second track 57 bearing is formed as or comprises a spherical bearing 63. Additionally, the first slat bearing 51 and the second slat bearing 55 may also be formed or comprise a spherical bearing 63, even though not illustrated. The recess 59 has a V-shape form or dimension, comprising a V-shaped surface 65 or spanwise width, that it allows movement of the first link element 41 and the second link element 43 in the span direction 21. With this form, the recess 59 is formed such that movement of the first link element 41 and the second link element 43 is limited in the span direction 21. Therefore, the V-shaped surface 65 may comprise or function as stopper 60. Fig. 5 shows the first link element 41 in a central position and in a tilted position (dashed line) in which the fist link element 41 is in contact with V-shaped surface of the slat track 29. This movement also applies for the second link element 43, as the first and second link element 41, 43 preferably move together between central position and the tilted position.

In an alternative embodiment, shown in Fig. 6, the first slat bearing 51 and the second slat bearing 55, when viewed in the span direction 21, are located at the upper side or above the slat track 29 (not illustrated), while the first track bearing 53 and the second track bearing 57 are located within the slat track contour, overlapping with a spanwise cross section of the slat track 29.

With the recess 59 and the first link element 41 a compact leading edge high lift assembly 11 is described providing lower overall dimensions, at least in a direction of movement of the slat 13. This is due to the roller bearing 37, the first slat bearing 51, and the first track bearing 53 can operate independently. In particular, they are not placed on a same plane along the direction of movement of the slat 13, thereby saving space in the chordwise dimension of the wing 5.

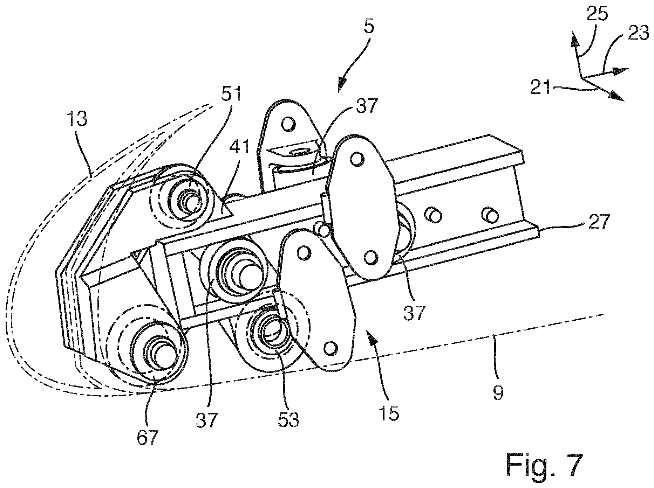

Fig. 7 shows a perspective view of a leading edge high lift assembly 11 according to another embodiment of the invention referred to as "master connection" due to the spanwise fixed connection of the slat 13 relative to the slat track 27. In this embodiment, the leading edge high lift assembly 11 comprises the first link 41, the first slat bearing 51 and the first track bearing 53. Further, the slat track 27 is directly, without a link in between, mounted to the slat 13 via a spanwise fixed bearing 67. The spanwise fixed bearing 67 can for example comprise a fixed lug connection. This allows no spanwise relative motion between the slat track 27 and the slat 13. A connection assembly 15 for one slat 13 usually comprises one master connection (shown in Fig. 7) for fixing the slat 13 in the span direction 21, and at least one slave connection (shown in Figs. 2 and 3) for provided spanwise tolerances to avoid constraint forces.

### Reference signs

- 1: Aircraft
- 3: Fuselage
- 5: Wing
- 7: Tail unit
- 9: Main wing
- 11: Leading edge high lift assembly
- 13: Slat
- 15: Connection assembly
- 17: First connection assembly
- 19: Second connection assembly
- 21: Span direction
- 23: Chord direction
- 25: Thickness direction
- 27, 27', 27": Slat track, first and second slat part
- 29: Track longitudinal centre axis
- 31: First end
- 33: Second end
- 35: Intermediate portion
- 37: Roller bearing
- 39: Link arrangement
- 41: First link element
- 43: Second link element
- 45: Drive unit
- 47: Drive pinion
- 49: Rack
- 51: First slat bearing
- 53: First track bearing
- 55: Second slat bearing
- 57: Second track bearing
- 59: Recess
- 60, 60', 60", 60‴, 60ʺʺ: Stopper, stopper surfaces
- 61: Longitudinal symmetry plane
- 63: Spherical bearing
- 65: V-shaped surface
- 67: Spanwise fixed bearing

## Claims

1. A wing (5) for an aircraft (1), comprising
a main wing (9) and
a leading edge high lift assembly (11) comprising
a slat (13) and
a connection assembly (15) movably connecting the slat (13) to the main wing (9), such that the slat (13) is movable between a retracted position and at least one extended position,
wherein the connection assembly (15) comprises an elongate slat track (27) that extends along a track longitudinal centre axis (29) between a first end (31) and a second end (33) and has an intermediate portion (35) between the first and second ends (31, 33),
wherein the first end (31) and/or the intermediate portion (35) of the slat track (27) is mounted to the slat (13),
wherein the slat track (27) is mounted to the main wing (9) by a roller bearing (37) such that the slat track (27) is movable along the track longitudinal centre axis (29),
wherein the slat track (27) is mounted to the slat (13) via a link arrangement (39) comprising at least a first link element (41),
wherein the first link element (41) is mounted to the slat (13) via a first slat bearing (51) and is mounted to the slat track (27) via a first track bearing (53),
**characterised in that**
the slat track (27) comprises a recess (59) opening to the upper side and/or to the lower side of the slat track (27), and
at least the first link element (41) of the link arrangement (39) extends through the recess (59).

2. The wing (5) according to claim 1, wherein the link arrangement (39) comprises a second link element (43) mounted to the slat (13) via a second slat bearing (55) and is mounted to the slat track (27) via a second track bearing (57).

3. The wing (5) according to claim 2, wherein the first slat bearing (51), the first track bearing (53), the second slat bearing (55), and/or the second track bearing (57) is formed as or comprises a spherical bearing (63).

4. The wing (5) according to claim 2 or 3, wherein the second link element (43) is formed as a link plate wherein the second slat bearing (55) and/or the second track bearing (57) comprises two spaced spherical bearings (63).

5. The wing (5) according to any of claims 1 to 4, wherein in addition to the link arrangement (39) the slat track (27) is directly mounted to the slat (13) via a spanwise fixed bearing.

6. The wing (5) according to any of claims 1 to 5, wherein the first track bearing (53), the second track bearing (57), the first slat bearing (51) and/or the second slat bearing (55) comprises an eccentric bush or an eccentric bolt for adjusting a mounting angle of the slat (13) relative to the slat track (27).

7. The wing (5) according to any of claims 1 to 6, wherein the first slat bearing (51) and/or the second slat bearing (55) is located at the upper side or above the slat track (27), while the first track bearing (53) and/or the second track bearing (57) is located within the slat track (27) contour or at the lower side or below the slat track (27), or
wherein the first slat bearing (51) and/or the second slat bearing (55) is located at the lower side or below the slat track (27), while the first track bearing (53) and/or the second track bearing (57) is located within the slat track (27) contour or at the upper side or above the slat track (27).

8. The wing (5) according to claim 7, wherein the recess (59) is formed as a slot extending along the track longitudinal centre axis (29).

9. The wing (5) according to claim 8, wherein the slat track (27) comprises separate first and second track parts (27', 27") assembled along the track longitudinal centre axis (29), and wherein the slot is formed between the first and second track parts (27', 27").

10. The wing (5) according to any of claims 7 to 9, wherein the recess (59) has such a form or dimension that it allows movement of at least the first link element (41) in a span direction (21).

11. The wing (5) according to any of claims 1 to 10, wherein the recess (59) is formed such that movement of the first link element (41) and/or second link element (43) is limited in a span direction (21) and/or or in the direction of the track longitudinal centre axis (29).

12. The wing (5) according to any of claims 1 to 11, wherein the roller bearing (37) comprises at least two roller units mounted to the main wing (9) and configured to engage a corresponding engagement surface at the slat track (27), or
wherein the roller bearing (37) comprises a first roller unit mounted to the second end (33) of the slat track (27) and configured to engage a guide rail mounted to the main wing (9), and a second roller unit mounted to the main wing (9) and configured to engage a corresponding engagement surface at the slat track (27).

13. The wing (5) according to any of claims 1 to 12, wherein the wing (5) further comprises a drive unit (45) mounted to the main wing (9) and coupled to the slat track (27) or slat (13) for moving the slat track (27) and the slat (13) between the retracted position and the at least one extended position,
wherein the drive unit (45) comprises a drive pinion (47) mounted to the main wing (9) and engaging a rack (49) provided at the slat track (27), or comprises a drive linkage including at least one drive link coupled to the slat track (27) or slat (13) and driven by a rotating actuator or a linear actuator mounted at the main wing (9), or comprising a rotating drive arm mounted to the main wing (9) and engaging a corresponding counter-bearing mounted to the slat track (27) or slat (13).

14. A leading edge high lift assembly (11) for the wing (5) according to any of claims 1 to 13, the leading edge high lift assembly (11) comprising
a slat (13) and
a connection assembly (15) configured for movably connecting the slat (13) to the main wing (9), such that the slat (13) is movable between a retracted position and at least one extended position,
wherein the connection assembly (15) comprises a slat track (27) that extends along a track longitudinal centre axis (29) between a first end (31) and a second end (33) and has an intermediate portion (35) between the first and second ends (31, 33),
wherein the first end (31) and/or the intermediate portion (35) of the slat track (27) is configurable to be mounted to the slat (13),
wherein the slat track (27) is configurable to be mounted to the main wing (9) by a roller bearing (37) such that the slat track (27) is movable along the track longitudinal centre axis (29),
wherein the slat track (27) is mounted to the slat (13) via a link arrangement (39) comprising at least a first link element (41),
wherein the first link element (41) is mounted to the slat (13) via a first slat bearing (51) and is mounted to the slat track (27) via a first track bearing (53),
**characterized in that**
the slat track (27) comprises a recess (59) opening to the upper side and/or to the lower side of the slat track (27), and
at least the first link element (41) of the link arrangement (39) extends through the recess (59).

15. An aircraft (1) comprising a wing (5) according to any of claims 1 to 13, and/or comprising a leading edge high lift assembly (11) according to claim 14.
